# EUROPÄISCHE PATENTANMELDUNG

(11) **EP 2 072 520 A1**
(43) Veröffentlichungstag der Anmeldung: **24.06.2009**
(21) Anmeldenummer: 07150161.3
(22) Anmeldetag: 19.12.2007
(51) Int. Cl.: C07F 7/18, C08K 5/00, C08G 18/00, C09J 175/04

(54) **Nitrilhaltige Haftvermittlerzusammensetzung**

(71) Anmelder: Sika Technology AG, 6340 Baar (CH)
(72) Erfinder: Huck, Wolf-Rüdiger, 8044, Zürich (CH); Wirz, Thomas, 8048, Zürich (CH)
(74) Vertreter: Sika Patent Attorneys

(57) **Zusammenfassung**

Die vorliegende Erfindung betrifft Haftvermittlerzusammensetzungen enthaltend mindestens eine Verbindung der Formel (I).

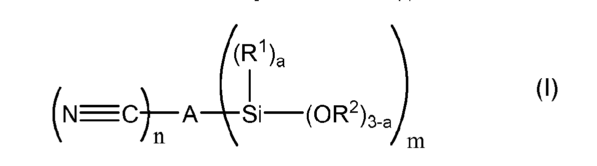

Derartige Haftvermittlerzusammensetzungen eignen sich insbesondere als Voranstrich für Kleb- und Dichtstoffe, bevorzugt für das Verkleben von Fahrzeugscheiben, welche in ihrem Randbereich Silberaufdrucke aufweisen und im Allgemeinen schwierig zu verkleben sind.

## Beschreibung

### Technisches Gebiet

Die Erfindung betrifft das Gebiet der Haftvermittlerzusammensetzungen für Klebstoffe, Dichtstoffe und für Zusammensetzungen zur Herstellung von Beschichtungen.

### Stand der Technik

Haftvermittlerzusammensetzungen werden schon seit längerem eingesetzt, um die Haftung von Kleb- und Dichtstoffen auf unterschiedlichen Untergründen zu verbessern. Bei der grossen Vielzahl und der ständigen Weiterentwicklung der zu verklebenden Substrate, bedarf es auch immer wieder neuer und spezifischer Haftvermittlerzusammensetzungen.
Ein Untergrund, der bekanntermassen schwierig zu verkleben ist, sind so genannte "Silberkeramiken". Unter einer Silberkeramik versteht man dabei eine Glaskeramik, wie sie beispielsweise im Randbereich von Fensterscheiben von Fahrzeugen zu finden ist, auf welcher zusätzlich Leiterbahnen aus Silber aufgetragen werden. Diese Leiterbahnen übernehmen typischerweise Funktionen als Antennen für den Betrieb von Radios, Mobiltelefonen, Satellitennavigationssystemen, TV-Geräten und/oder für die Fernsteuerung der Zentralverriegelung. Durch die steigende Anzahl an derartigen Antennen, liegen solche Leiterbahnen vermehrt auch im Bereich der Verklebung, was zu Einbussen bei der Haftung führt.
Derzeit bekannte Haftvermittlerzusammensetzungen führen auf Untergründen, welche mit einer Silberkeramik beschichtet sind, nur zu geringen Verbesserungen in der Haftung.

### Darstellung der Erfindung

Die Aufgabe der vorliegenden Erfindung ist es daher, eine neue Haftvermittlerzusammensetzung zur Verfügung zu stellen, welche eine verbesserte Haftung auf Silberkeramik aufweist.
Überraschenderweise wurde nun gefunden, dass diese Aufgabe durch eine Haftvermittlerzusammensetzung nach Anspruch 1 gelöst werden kann. Durch den Einsatz von Haftvermittlerzusammensetzungen, welche sowohl mindestens eine Alkoxysilangruppe sowie mindestens eine Nitrilgruppe aufweisen, verbessert sich die Haftung des Klebstoffs auf der Silberkeramik signifikant.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine Haftvermittlerzusammensetzung enthaltend mindestens eine Verbindung der Formel (I)

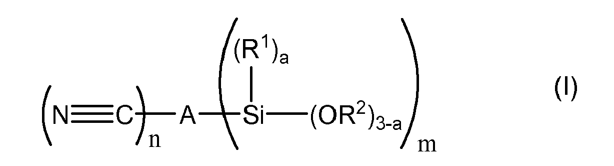

Dabei steht A für einen (n+m)-wertigen, linearen oder verzweigten Kohlenwasserstoffrest mit 1 bis 50, insbesondere mit 3 bis 30 C-Atomen, gegebenenfalls mit cyclischen und/oder aromatischen Anteilen und gegebenenfalls mit mindestens einem Heteroatom, insbesondere Sauerstoff und/oder Stickstoff und/oder Schwefel.
n steht für einen Wert von 1 bis 5, insbesondere von 1 bis 3, bevorzugt von 1.
m steht für einen Wert von 1 bis 5, insbesondere von 1 bis 3, bevorzugt von 1 bis 2.
R¹ steht für eine Alkylgruppe mit 1 bis 8 C-Atomen, insbesondere für eine Methyl- oder für eine Ethylgruppe.
R² steht für eine Alkylgruppe mit 1 bis 5 C-Atomen, insbesondere für eine Methyl- oder für eine Ethyl- oder für eine Isopropylgruppe, bevorzugt für eine Methyl- oder für eine Ethylgruppe.
a steht für einen Wert von 0 oder 1, insbesondere für 0.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Im vorliegenden Dokument bezeichnen die Terme "Organosilane" Silane, welche mindestens einen organischen Rest aufweisen, welcher über eine Si-C-Bindung an das Siliziumatom gebunden ist. Als "Alkylsilane" werden Organosilane bezeichnet, deren organischer Rest eine Kohlenwasserstoffgruppe ist. Diese Alkylsilane weisen keine weiteren organischen Reste auf, welche über C-Si-Bindungen gebunden sind und funktionelle Gruppen mit Heteroatomen, wie Amino- oder Mercaptogruppen, aufweisen. Als "Aminosilane", beziehungsweise "Mercaptosilane" werden Organosilane bezeichnet, deren organischer Rest eine Aminogruppe oder eine Mercaptogruppe aufweist. "Tetraalkoxysilane" stellen demzufolge gemäss dieser Definition keine Organosilane dar.
Der hier verwendete Term "unabhängig von einander" bedeutet nicht nur "unabhängig von den anderen Inhaltsstoffen" sondern auch "unabhängig innerhalb desselben Moleküls". So sind beispielsweise auch Verbindungen der Formel (I) möglich, welche Ethoxy-Dimethoxy-Alkylsilane (R² = Methyl, R² = Methyl, R² = Ethyl) aufweisen.

Die erfindungsgemässe Haftvermittlerzusammensetzung enthält mindestens eine Verbindung der Formel (I), welche in einer Ausführungsform ein Reaktionsprodukt eines Polyisocyanats mit mindestens einem Organosilan, enthaltend mindestens eine NCO-reaktive Gruppe, sowie mit mindestens einem Nitril, enthaltend mindestens eine NCO-reaktive Gruppe, ist. Eine derartige NCO-reaktive Gruppe ist beispielsweise eine Hydroxylgruppe, eine primäre oder eine sekundäre Aminogruppe oder eine Mercaptogruppe.
Derartige Reaktionen zur Herstellung von Verbindungen der Formel (I) sind dem Fachmann selbstverständlich bekannt und verlaufen schematisch dargestellt typischerweise gemäss folgender Reaktionsgleichung 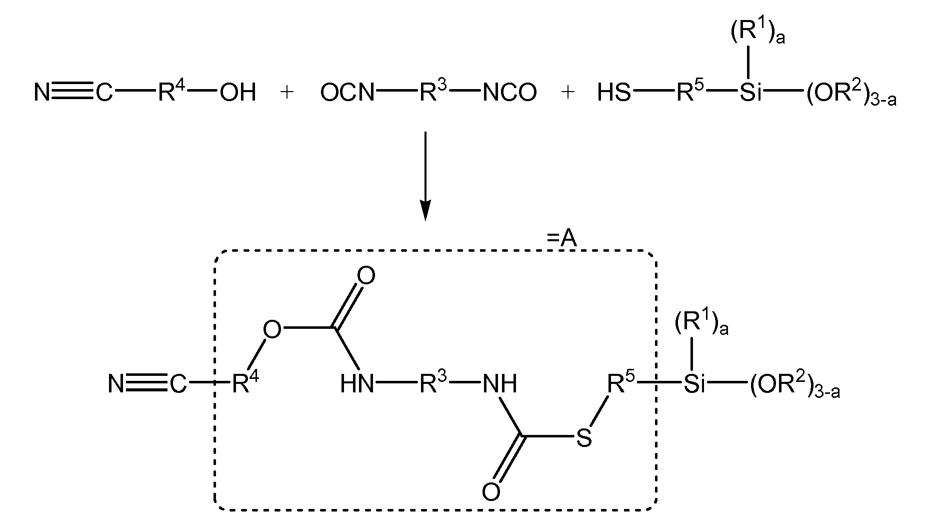 wobei in diesem dargestellten Fall n = m = 1 ist. Die Reste R³, R⁴ und R⁵ können dabei unter der Voraussetzung, dass R³, R⁴ und R⁵ zusammen mit der Urethangruppe und der Thiocarbamatgruppe einem Rest A, wie er vorhergehend beschrieben worden ist, entsprechen, ausgewählt sein.

Als Polyisocyanate für die Herstellung einer vorhergehend beschriebenen Verbindung der Formel (I) können handelsübliche aliphatische, cycloaliphatische oder aromatische Polyisocyanate, insbesondere Diisocyanate, verwendet werden.
Beispielsweise sind das Diisocyanate, deren Isocyanatgruppen an jeweils ein aliphatisches, cycloaliphatisches oder arylaliphatisches C-Atom gebunden sind, auch "aliphatische Diisocyanate" genannt, wie 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethylcyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin; sowie Diisocyanate mit an jeweils ein aromatisches C-Atom gebundenen Isocyanatgruppen, auch "aromatische Diisocyanate" genannt, wie 2,4- und 2,6-Toluylendiisocyanat (TDI), 4,4'-, 2,4'-und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.

In einer weiteren Ausführungsform ist die Verbindung der Formel (I) ein Reaktionsprodukt aus einer 1,4-Addition eines Organosilans, enthaltend mindestens eine nucleophile Gruppe, und einem Michael-Akzeptor, enthaltend mindestens eine Nitril-Gruppe. Insbesondere ist das Organosilan ein Aminosilan mit mindestens einer primären oder sekundären Aminogruppe oder ein Mercaptosilan und der Michael-Akzeptor, enthaltend mindestens eine Nitril-Gruppe, ein a,β-ungesättigtes Nitril.
Derartige Reaktionen zur Herstellung von Verbindungen der Formel (I) werden als "Michael-artige Reaktionen" bezeichnet und sind dem Fachmann bestens bekannt. Schematisch dargestellt verlaufen sie typischerweise gemäss folgender Reaktionsgleichung 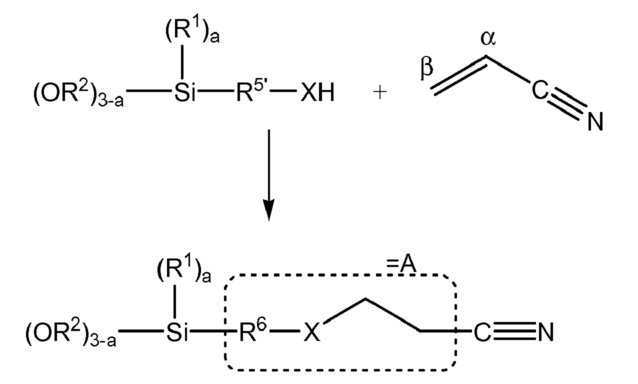 wobei in diesem dargestellten Fall n = m = 1 ist. Der Rest X steht insbesondere für S oder für N-R⁷, wobei R⁷ für ein Wasserstoffatom, ein Alkyl-, Cycloalkyl- oder Arylrest steht. Der Rest R⁶ kann dabei unter der Voraussetzung, dass R⁶ zusammen mit X und dem -CH₂-CH₂- einem Rest A entsprechen, ausgewählt sein.

Der Anteil der Verbindung der Formel (I) beträgt vorzugsweise 0.05 bis 15 Gew.-%, insbesondere 0.1 bis 5 Gew.-%, der gesamten Haftvermittlerzusammensetzung.

Weiterhin umfasst die Haftvermittlerzusammensetzung vorzugsweise zusätzliche Haftvermittler, insbesondere Silane der Formel (II)

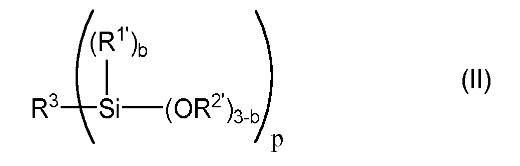

Dabei steht der Rest R^{1'} für eine Alkylgruppe mit 1 bis 8 C-Atomen, insbesondere für eine Methyl- oder für eine Ethylgruppe.
Der Rest R^{2'} steht für eine Alkylgruppe mit 1 bis 5 C-Atomen, insbesondere für eine Methyl-, eine Ethyl- oder für eine Isopropylgruppe, für ein Wasserstoffatom oder für einen Acetylrest.

Der Rest R³ steht für einen p-wertigen Alkylrest mit mindestens einer funktionellen Gruppe, insbesondere einer Amino-, Mercapto-, Epoxy-, (Meth)-acrylatester- oder Vinyl-Gruppe, insbesondere einer Amino- oder Mercaptogruppe.
b steht für einen Wert von 0 oder 1, insbesondere für 0.
p steht für einen Wert von 1 bis 3.

Der Anteil der Verbindung der Formel (II) beträgt 0.05 bis 15 Gew.-%, insbesondere 0.1 bis 10 Gew.-%, der gesamten Haftvermittlerzusammensetzung.

Weiterhin bevorzugt weist die Haftvermittlerzusammensetzung zusätzlich mindestens ein Lösungsmittel auf. Als Lösungsmittel werden insbesondere Ether, Ketone, Ester oder Kohlenwasserstoffe, bevorzugt Diethylether, Tetrahydrofuran, Methylethylketon, Aceton, Hexan, Heptan, Xylol, Toluol oder Acetate, insbesondere Methylacetat, Ethylacetat oder Butylacetat, verwendet.
Der Anteil des Lösungsmittels beträgt vorzugsweise 40 bis 99 Gew.-%, insbesondere 60 bis 95 Gew.-%, bevorzug 70 bis 90 Gew.-%, der gesamten Haftvermittlerzusammensetzung.

Vorzugsweise weist die Haftvermittlerzusammensetzung weiterhin einen Füllstoff auf. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearaten, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black; im Folgenden als "Russ" bezeichnet), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.
Eine geeignete Menge Füllstoff liegt beispielsweise im Bereich von 0.5 bis 30 Gew.-%, insbesondere 1 bis 15 Gew.-%, bevorzugt 5 bis 10 Gew.-%, bezogen auf die gesamte Haftvermittlerzusammensetzung.

Weiterhin kann die Zusammensetzung mindestens einen Weichmacher, beispielsweise als Lösungsmittelersatz, enthalten. Insbesondere sind solche Weichmacher Ester organischer Carbonsäuren oder deren Anhydride, zum Beispiel Phthalate wie Dioctylphthalat, Diisononylphthalat oder Diisodecylphthalat, Adipate wie Dioctyladipat, Azelate und Sebacate, organische Phosphor- und Sulfonsäureester, Polybutene und Polyisobutene.
Die Haftvermittlerzusammensetzung kann weitere Bestandteile, wie beispielsweise Katalysatoren, Trocknungsmittel, Thixotropiermittel, Rheologiemodifikatoren, Dispergiermittel, Netzmittel, Korrosionsinhibitoren, weitere Haftvermittler, UV- und Hitzestabilisatoren, Pigmente, Farbstoffe und UV-Indikatoren umfassen.

Weiterhin betrifft die vorliegende Erfindung die Verwendung Haftvermittlerzusammensetzung, wie sie vorhergehend beschrieben wurde, als Voranstrich für Klebstoffe, Dichtstoffe oder für Zusammensetzungen zur Herstellung von Beschichtungen.
Als Klebstoff bzw. Dichtstoff kann grundsätzlich jeder ein- oder mehrkomponentige Klebstoff verwendet werden. Vorzugsweise wird ein feuchtigkeitshärtender Klebstoff verwendet, insbesondere ein Klebstoff, dessen Aushärtung mittels Luftfeuchtigkeit erfolgt. Einerseits sind dies Klebstoffe basierend auf Silangruppen-terminierten Polymeren, wie sie dem Fachmann unter der Bezeichnung "MS-Polymere" bekannt sind, oder andererseits basierend auf Silangruppen-terminierten Polyurethanen, wie sie dem Fachmann unter der Bezeichnung "SPUR" **(S**ilane Terminated **P**oly**ur**ethanes) bekannt sind. Die vorteilhaften Haftverbesserungen haben sich jedoch insbesondere bei Polyurethanklebstoffen oder -dichtstoffen gezeigt, insbesondere bei Polyurethanklebstoffen, welche Isocyanatgruppen aufweisende Polyurethanpolymere enthalten.

Die Applikation der Haftvermittlerzusammensetzung kann mittels Tuch, Filz, Rolle, Sprühen, Schwamm, Pinsel, Tauchbeschichten oder dergleichen durchgeführt werden und kann sowohl manuell als auch mittels Roboter erfolgen.

Weiterhin betrifft die vorliegende Erfindung ein Verfahren zur Verklebung zweier Substrate **S1** und/oder **S2** umfassend die Schritte
a1) Applizieren einer Haftvermittlerzusammensetzung gemäss vorhergehender Beschreibung auf ein zu verklebendes Substrat **S1;**
a2) Applizieren eines Klebstoffs auf die abgelüftete Haftvermittlerzusammensetzung, welche sich auf dem Substrat **S1** befindet;
a3) Kontaktieren des Klebstoffs mit einem zweiten Substrat **S2** innerhalb der Offenzeit des Klebstoffs;
oder
b1) Applizieren einer Haftvermittlerzusammensetzung gemäss vorhergehender Beschreibung auf ein zu verklebendes Substrat **S1**;
b2) Applizieren eines Klebstoffs auf die Oberfläche eines zweiten Substrats **S2**;
b3) Kontaktieren des Klebstoffs mit der abgelüfteten Haftvermittlerzusammensetzung, welche sich auf dem Substrat **S1** befindet innerhalb der Offenzeit des Klebstoffs;
oder
c1) Applizieren einer Haftvermittlerzusammensetzung gemäss vorhergehender Beschreibung auf ein zu verklebendes Substrat **S1**;
c2) Applizieren einer Haftvermittlerzusammensetzung gemäss vorhergehender Beschreibung auf ein zu verklebendes Substrat **S2**;
c3) Applizieren eines Klebstoffs auf mindestens eine abgelüftete Haftvermittlerzusammensetzung, welche sich auf dem Substrat **S1** und auf dem Substrat **S2** befindet;
c4) Fügen des mit Haftvermittlerzusammensetzung und mit einem Klebstoff beschichteten Substrats **S1** mit dem mit Haftvermittlerzusammensetzung und gegebenenfalls mit einem zweiten Klebstoff beschichteten Substrat **S2** innerhalb der Offenzeit des Klebstoffs;
oder
d1) Applizieren einer Haftvermittlerzusammensetzung gemäss vorhergehender Beschreibung auf mindestens ein zu verklebendes Substrat **S1** und/oder **S2**;
d2) Applizieren eines Klebstoffs zwischen die Oberflächen der Substrate **S1** und **S2**.

Weiterhin umfasst die Erfindung ein Verfahren des Abdichtens oder des Beschichtens eines Substrats **S1** und/oder **S2** umfassend die Schritte
e1) Applizieren einer Haftvermittlerzusammensetzung gemäss vorhergehender Beschreibung auf ein Substrat **S1** und/oder **S2**;
e2) Applizieren einer Zusammensetzung zum Abdichten und/oder Beschichten auf die abgelüftete Haftvermittlerzusammensetzung, welche sich auf dem Substrat **S1** und/oder **S2** befindet.

Sowohl beim Verfahren des Verklebens als auch beim Verfahren des Abdichtens oder des Beschichtens, wie sie soeben beschrieben worden sind, besteht das zweite Substrat **S2** aus demselben oder einem unterschiedlichen Material wie das Substrat **S1**.
Typischerweise schliesst sich bei den beschriebenen Verfahren an den Schritt a3), b3), c4), d2) oder e2) ein Schritt des Aushärtens des Klebstoffs, Dichtstoffs oder der Zusammensetzung zur Herstellung von Beschichtungen an.

Weiterhin betrifft die vorliegende Erfindung ein mit einer Haftvermittlerzusammensetzung, wie sie vorgängig beschrieben worden ist, beschichtetes Substrat **S1** und/oder **S2**.
Als Substrate **S1** und/oder **S2** eignen sich insbesondere Substrate, welche ausgewählt sind aus der Gruppe bestehend aus Glas, Keramik, Glaskeramik, Beton, Mörtel, Backstein, Ziegel, Gips, Naturstein wie Granit oder Marmor, Holz, Metall oder Metalllegierung wie Aluminium, Stahl, Buntmetall oder verzinktes Metall, Kunststoff wie PVC, Polycarbonat, PMMA, Polyester oder Epoxidharz, Pulverbeschichtung, Farbe oder Lack, insbesondere Automobildecklack.
Insbesondere ist das Substrat **S1** und/oder **S2** Silber, eine auf Silber basierende Zusammensetzung oder Legierung oder eine mit Silber beschichtete Glaskeramik, bevorzugt eine Silberkeramik.
Derartige so genannte "Silberkeramiken" werden typischerweise im Randbereich von Fensterscheiben für den Fahrzeugbau eingesetzt. Dort erfüllt einerseits die Keramik die Aufgabe, dass der Kleb- oder Dichtstoff, mit dem die Fensterscheibe verklebt wurde, keiner direkten Sonneneinstrahlung und somit keiner den Kleb- oder Dichtstoff schädigenden UV-Strahlung ausgesetzt ist. Andererseits ermöglicht die Silberbeschichtung auf der Keramik, die Nutzung der Fensterscheibe beispielsweise als Antenne zum Senden und/oder Empfangen von Kommunikationssignalen von Funk, Mobiltelefonen oder Satellitennavigationssystemen.

Meist bevorzugt sind die Substrate **S1** eine Fensterscheibe, welche in ihrem Randbereich eine Silberkeramik aufweist, und **S2** ein Metall oder eine Metalllegierung, insbesondere ein lackiertes Metall oder eine lackierte Metalllegierung, wie sie in der Fertigung von Transportmitteln, insbesondere Fahrzeugen zu Wasser oder zu Land, bevorzugt Automobilen, Bussen, Lastkraftwagen, Zügen oder Schiffen, meist bevorzugt Automobilen, eingesetzt werden.

Weiterhin betrifft die vorliegende Erfindung ebenfalls verklebte, abgedichtete oder beschichtete Artikel, welche durch ein Verfahren, wie es vorhergehend beschrieben wurde, erhalten werden.
Bei diesen Artikeln handelt es sich vorzugsweise um ein Bauwerk, insbesondere ein Bauwerk des Hoch- oder Tiefbaus, oder ein industrielles Gut oder ein Konsumgut, insbesondere ein Fenster, eine Haushaltsmaschine, oder ein Transportmittel, insbesondere ein Fahrzeug zu Wasser oder zu Land, bevorzugt ein Automobil, ein Bus, ein Lastkraftwagen, ein Zug oder ein Schiff. Bevorzugt sind solche Artikel auch Anbauteile, insbesondere auch Modulteile, welche an der Fertigungslinie als Module verwendet werden und insbesondere an- oder eingeklebt werden. Insbesondere werden diese vorgefertigten Anbauteile im Transportmittelbau eingesetzt. Beispielsweise sind derartige Anbauteile Führerkabinen von Lastkraftwagen oder von Lokomotiven oder Schiebedächer von Automobilen. Bevorzugt handelt es sich bei diesen Artikeln um Fensterscheiben von Transportmitteln, insbesondere um Fensterscheiben von Automobilen und Lastkraftwagen.

### Beispiele

### Herstellung der Haftvermittler

Der Haftvermittler *HV1* ist 3-(2-(3-(Trimethoxysilyl)propan-1-amino)-ethylamino)pentannitril und wurde hergestellt in einer Michael-artigen Reaktion zwischen 2-Pentennitril und 3-(2-Aminoethylamino)propyltrimethoxysilan, welches unter dem Handelsnamen Silquest^{®} A-1120 kommerziell erhältlich ist von der Firma Momentive Performance Materials Inc., USA. Dabei wurden 7.33 g 3-(2-Aminoethylamino)propyltrimethoxysilan und 2.67 g 2-Pentennitril miteinander vermischt und während 4 Stunden bei einer Temperatur von 80 °C unter Rühren zur Reaktion gemacht.
Der Haftvermittler *HV2* ist 3-(Bis(3-(trimethoxysilyl)propyl)amino)-pentannitril und wurde hergestellt in einer Michael-artigen Reaktion zwischen 2-Pentennitril und Bis-(3-(trimethoxysilyl)-propyl)-amin, welches unter dem Handelsnamen Silquest^{®} A-1170 kommerziell erhältlich ist von der Firma Momentive Performance Materials Inc., USA. Dabei wurden 11.24 g Bis-(3-(trimethoxysilyl)-propyl)-amin und 2.67 g 2-Pentennitril miteinander vermischt und während 4 Stunden bei einer Temperatur von 80 °C unter Rühren zur Reaktion gemacht.
Der Haftvermittler *HV3* entspricht einer Verbindung der Formel (III) und wurde hergestellt aus 17.2 g HDI-Isocyanaurat, welches unter dem Handelsnamen Desmodur^{®} N 3300 kommerziell erhältlich ist von der Firma Bayer MaterialScience AG, Deutschland, und 2.0 g 3-Mercaptopropyltimethoxysilan, welches unter dem Handelsnamen Silquest^{®} A-189 kommerziell erhältlich ist von der Firma Momentive Performance Materials Inc., USA. Die Bestandteile wurden in einer Schüttelapparatur während etwa 5 Minuten unter Schutzgasatmosphäre bei Raumtemperatur gemischt und dann während etwa 48 Stunden bei einer Temperatur von 60 °C gelagert.

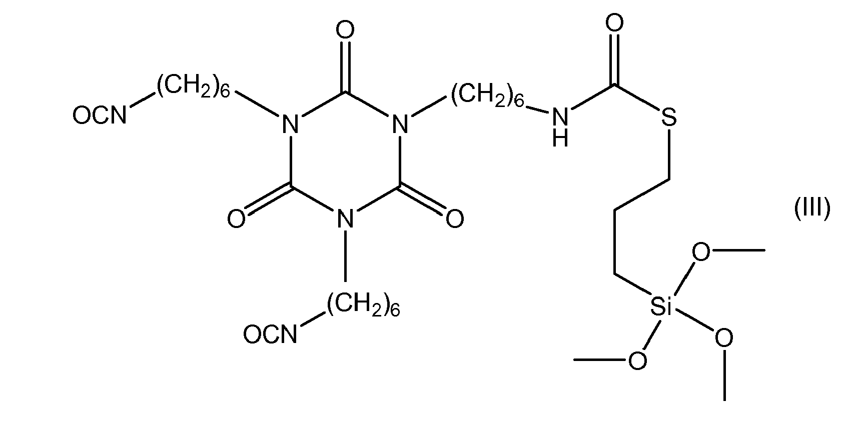

Der Haftvermittler *HV4* entspricht einer Verbindung der Formel (IV) und wurde hergestellt aus 15.9 g einer Verbindung der Formel (III), welche wie vorhergehend beschrieben erhalten wurde, und 0.7 g 3-Hydroxy-propionitril, welches kommerziell erhältlich ist von der Firma Fluka Chemie GmbH, Schweiz. Die Bestandteile wurden in einer Schüttelapparatur während etwa 5 Minuten unter Schutzgasatmosphäre bei Raumtemperatur gemischt und dann während etwa 48 Stunden bei einer Temperatur von 60 °C gelagert.

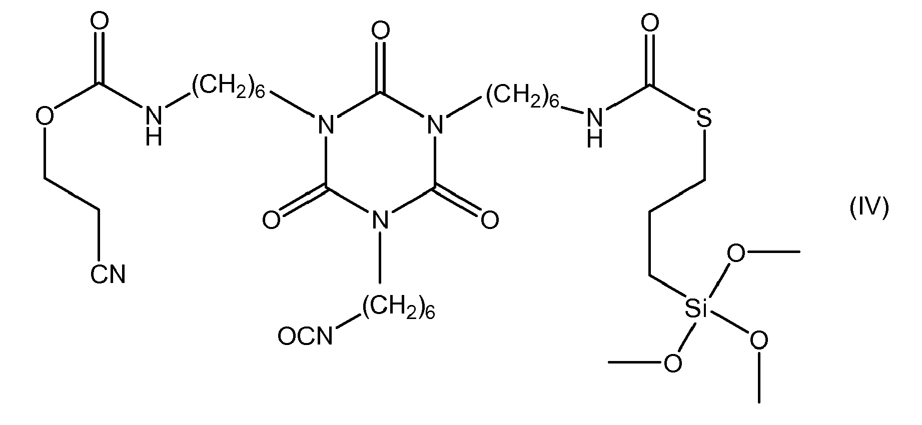

### Herstellung der Haftvermittlerzusammensetzunqen

Gemäss den Mengen in Tabelle 1 wurde der Haftvermittler zusammen mit den gegebenenfalls vorhandenen weiteren Bestandteilen und dem Lösungsmittel bei Raumtemperatur vermischt.

**Tabelle 1 Haftvermittlerzusammensetzungen und Haftungsrestultate;**

| **Inhaltsstoffe in [Gew.-%]** | ***1*** | ***2*** | ***3*** | ***4*** | ***5*** | ***Ref1*** | ***Ref2*** | ***Ref3*** | ***Ref4*** |
|---|---|---|---|---|---|---|---|---|---|
| *HV1* | 5 | 5 | | | | | | | |
| *HV2* | | | 5 | 5 | | | | | |
| *HV3* | | | | | | | | 5 | |
| *HV4* | | | | | 5 | | | | |
| 2-PN^{a)} | | | | | | | 5 | | 5 |
| Toluol | 95 | 87.5 | 95 | 87.5 | 87.5 | 92.5 | 95 | 95 | 87.5 |
| A-1170^{b)} | | 3.75 | | 3.75 | 3.75 | 3.75 | | | 3.75 |
| A-189^{c)} | | 3.75 | | 3.75 | 3.75 | 3.75 | | | 3.75 |
| Summe | 100 | 100 | 100 | 100 | 100 | 100 | 100 | 100 | 100 |
| | | | | | | | | | |
| Haftung nach | | | | | | | | | |
| "KL" | 1 | 3 | 3 | 2 | 1 | 5 | 5 | 5 | 3 |
| "WL" | 5 | 4 | 3 | 5 | 1 | 5 | 5 | 5 | 5 |
| "CL" | 5 | 5 | 5 | 5 | 1 | 5 | 5 | 4 | 5 |

| | | | | | | | | | |
|---|---|---|---|---|---|---|---|---|---|
| ^{a)} 2-PN = 2-Pentennitril; ^{b)} A-1170 = Bis-(3-(trimethoxysilyl)-propyl)-amin; ^{c)} A-189 = 3-Mercaptopropyltrimethoxysilan. | | | | | | | | | |

### Testverfahren

### Applikation und Aushärtung

Die Haftvermittlerzusammensetzungen wurden jeweils auf dem Substrat im so genannten "wipe on/off"-Verfahren mittels eines Wischtuchs (Tela^{®}, Tela-Kimberly Switzerland GmbH) appliziert. Nach 10 Minuten Ablüftzeit wurden die Klebstoffe als Rundraupe mit einer Kartuschenpresse und einer Düse auf die mit Haftvermittlerzusammensetzung beschichtete Substratoberfläche aufgetragen. Die Klebstofftemperatur bei der Applikation lag bei Raumtemperatur.
Anschliessend wurde der Klebstoff während 7 Tagen bei 23 °C und 50% relativer Luftfeuchtigkeit (Raumtemperatur-Klimalagerung: "KL") ausgehärtet und es wurde ein Drittel der Raupe mittels unten beschriebenen Haftungstest getestet. Danach wurde die Probe während weiteren 7 Tagen ins Wasser bei 23 °C gelegt (Wasserlagerung: "WL"). Anschliessend wurde die Haftung durch den Raupentest für ein weiteres Drittel der Raupe getestet. Daraufhin wurden die Substrate einem Cataplasmaklima von 100% relativer Luftfeuchtigkeit und 70 °C ("CL"), ausgesetzt und danach die Haftung des letzten Drittels der Raupe ermittelt.

### Substrat

Als Substrat wurde ein Silberaufdruck bzw. die Silberaufdruckbereiche auf der Glaskeramik einer original BMW-Heckscheibe (Einscheibensicherheitsglas) der 3-er Modelle (Serienstand Juli 2006), verwendet.

### Klebstoff

Als Klebstoff wurde der einkomponentige Polyurethanklebstoff Sikaflex^{®}-221 verwendet, welcher von der Sika Schweiz AG kommerziell erhältlich ist.

### Haftungstest ("Raupentest")

Die Haftung des Klebstoffes wurde mittels 'Raupentest' getestet. Hierbei wird am Ende der Raupe knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie durch Plazieren eines Schnittes bis auf den blanken Untergrund senkrecht zur Raupenziehrichtung. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen des kohäsiven Anteils der Haftfläche:
1 = > 95% Kohäsionsbruch
2 = 75 - 95% Kohäsionsbruch
3 = 25 - 75% Kohäsionsbruch
4 = < 25% Kohäsionsbruch
5 = 0% Kohäsionsbruch (rein adhäsiver Bruch).

## Patentansprüche

1. Haftvermittlerzusammensetzung enthaltend
mindestens eine Verbindung der Formel (I) 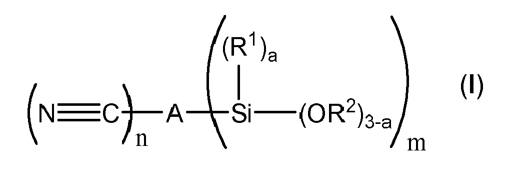 wobei
A für einen (n+m)-wertigen, linearen oder verzweigten Kohlenwasserstoffrest mit 1 bis 50 C-Atomen, gegebenenfalls mit cyclischen und/oder aromatischen Anteilen und gegebenenfalls mit mindestens einem Heteroatom, insbesondere Sauerstoff und/oder Stickstoff und/oder
Schwefel, steht;
n für einen Wert von 1 bis 5 steht;
m für einen Wert von 1 bis 5 steht;
R¹ für eine Alkylgruppe mit 1 bis 8 C-Atomen steht;
R² für eine Alkylgruppe mit 1 bis 5 C-Atomen steht; und
a für einen Wert von 0 oder 1 steht.

2. Haftvermittlerzusammensetzung gemäss Anspruch 1, **dadurch**
**gekennzeichnet, dass**
A für einen (n+m)-wertigen, linearen oder verzweigten Kohlenwasserstoffrest mit 3 bis 30 C-Atomen, gegebenenfalls mit cyclischen und/oder aromatischen Anteilen und gegebenenfalls mit mindestens einem Heteroatom, insbesondere Sauerstoff und/oder Stickstoff und/oder
Schwefel, steht;
n für einen Wert von 1 bis 3, insbesondere von 1, steht;
m für einen Wert von 1 bis 3, insbesondere von 1 bis 2, steht;
R² für eine Methyl- oder für eine Ethyl- oder für eine Isopropylgruppe, insbesondere für eine Methyl- oder für eine Ethylgruppe steht; und
a für einen Wert von 0 steht.

3. Haftvermittlerzusammensetzung gemäss einem der Ansprüche 1 oder 2, **dadurch gekennzeichnet, dass** die Verbindung der Formel (I) ein Reaktionsprodukt eines Polyisocyanats
mit mindestens einem Organosilan, enthaltend mindestens eine NCO-reaktive Gruppe; sowie
mit mindestens einem Nitril, enthaltend mindestens eine NCO-reaktive Gruppe, ist.

4. Haftvermittlerzusammensetzung gemäss einem der Ansprüche 1 oder 2, **dadurch gekennzeichnet, dass** die Verbindung der Formel (I) ein Reaktionsprodukt aus einer 1,4-Addition eines Organosilans, enthaltend mindestens eine nucleophile Gruppe, und einem Michael-Akzeptor, enthaltend mindestens eine Nitril-Gruppe, ist.

5. Haftvermittlerzusammensetzung gemäss Anspruch 4, **dadurch gekennzeichnet, dass**
das Organosilan, enthaltend mindestens eine nucleophile Gruppe, ein Aminosilan mit mindestens einer primären oder sekundären Aminogruppe oder ein Mercaptosilan ist; und
der Michael-Akzeptor ein a,β-ungesättigtes Nitril ist.

6. Haftvermittlerzusammensetzung gemäss einem der vorhergehenden Ansprüche, **dadurch gekennzeichnet, dass** die Haftvermittlerzusammensetzung zusätzliche Haftvermittler, insbesondere Silane der Formel (II), enthält 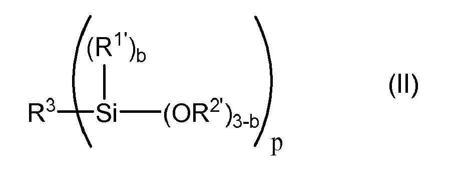 wobei
R^{1'} für eine Alkylgruppe mit 1 bis 8 C-Atomen, insbesondere für eine Methyl- oder für eine Ethylgruppe, steht;
R^{2'} für eine Alkylgruppe mit 1 bis 5 C-Atomen, insbesondere für eine Methyl- oder für eine Ethyl- oder für eine Isopropylgruppe, oder für ein Wasserstoffatom oder für einen Acetylrest steht;
b für einen Wert von 0 oder 1, insbesondere für 0, steht;
R³ für einen p-wertigen Alkylrest mit mindestens einer funktionellen Gruppe, insbesondere einer Amino-, Mercapto-, Epoxy-, (Meth)acrylatester- oder Vinyl-Gruppe, insbesondere einer Amino- oder Mercaptogruppe, steht; und
p für einen Wert von 1 bis 3 steht.

7. Haftvermittlerzusammensetzung gemäss einem der vorhergehenden Ansprüche, **dadurch gekennzeichnet, dass** der Anteil der Verbindung der Formel (I) 0.05 bis 15 Gew.-%, insbesondere 0.1 bis 5 Gew.-%, der gesamten Haftvermittlerzusammensetzung beträgt.

8. Haftvermittlerzusammensetzung gemäss einem der vorhergehenden Ansprüche, **dadurch gekennzeichnet, dass** der Anteil der Verbindung der Formel (II) 0.05 bis 15 Gew.-%, insbesondere 0.1 bis 10 Gew.-%, der gesamten Haftvermittlerzusammensetzung beträgt.

9. Haftvermittlerzusammensetzung gemäss einem der vorhergehenden Ansprüche, **dadurch gekennzeichnet, dass** die Haftvermittlerzusammensetzung zusätzlich mindestens ein Lösungsmittel enthält.

10. Haftvermittlerzusammensetzung gemäss einem der vorhergehenden Ansprüche, **dadurch gekennzeichnet, dass** der Anteil des Lösungsmittels 40 bis 99 Gew.-%, insbesondere 60 bis 95 Gew.-%, bevorzug 70 bis 90 Gew.-%, an der gesamten Haftvermittlerzusammensetzung beträgt.

11. Haftvermittlerzusammensetzung gemäss einem der vorhergehenden Ansprüche, **dadurch gekennzeichnet, dass** die Haftvermittlerzusammensetzung zusätzlich mindestens einen Weichmacher enthält.

12. Haftvermittlerzusammensetzung gemäss einem der vorhergehenden Ansprüche, **dadurch gekennzeichnet, dass** die Haftvermittlerzusammensetzung zusätzlich mindestens einen Füllstoff, insbesondere industriell hergestellten Russ, enthält.

13. Verwendung einer Haftvermittlerzusammensetzung gemäss einem der Ansprüche 1 bis 12 als Voranstrich für Klebstoffe, Dichtstoffe oder für Zusammensetzung zur Herstellung von Beschichtungen.

14. Ein mit einer Haftvermittlerzusammensetzung gemäss einem der Ansprüche 1 bis 12 beschichtetes Substrat, **dadurch gekennzeichnet, dass** das Substrat Silber, eine auf Silber basierende Zusammensetzung oder Legierung oder eine mit Silber beschichtete Glaskeramik, bevorzugt eine Silberkeramik, ist.

15. Verfahren zur Verklebung umfassend die Schritte
a1) Applizieren einer Haftvermittlerzusammensetzung gemäss einem der Ansprüche 1 bis 12 auf ein zu verklebendes Substrat **S1**;
a2) Applizieren eines Klebstoffs auf die abgelüftete Haftvermittlerzusammensetzung, welche sich auf dem Substrat **S1** befindet;
a3) Kontaktieren des Klebstoffs mit einem zweiten Substrat **S2** innerhalb der Offenzeit des Klebstoffs;
oder
b1) Applizieren einer Haftvermittlerzusammensetzung gemäss einem der Ansprüche 1 bis 12 auf ein zu verklebendes Substrat **S1**;
b2) Applizieren eines Klebstoffs auf die Oberfläche eines zweiten Substrats **S2**;
b3) Kontaktieren des Klebstoffs mit der abgelüfteten Haftvermittlerzusammensetzung, welche sich auf dem Substrat **S1** befindet innerhalb der Offenzeit des Klebstoffs;
oder
c1) Applizieren einer Haftvermittlerzusammensetzung gemäss einem der Ansprüche 1 bis 12 auf ein zu verklebendes Substrat **S1**;
c2) Applizieren einer Haftvermittlerzusammensetzung gemäss einem der Ansprüche 1 bis 12 auf ein zu verklebendes Substrat **S2**;
c3) Applizieren eines Klebstoffs auf mindestens eine abgelüftete Haftvermittlerzusammensetzung, welche sich auf dem Substrat **S1** und auf dem Substrat **S2** befindet;
c4) Fügen des mit Haftvermittlerzusammensetzung und mit einem Klebstoff beschichteten Substrats **S1** mit dem mit Haftvermittlerzusammensetzung und mit einem zweiten Klebstoff beschichteten Substrat **S2** innerhalb der Offenzeit des Klebstoffs;
oder
d1) Applizieren einer Haftvermittlerzusammensetzung gemäss einem der Ansprüche 1 bis 12 auf mindestens ein zu verklebendes Substrat **S1** und/oder **S2**;
d2) Applizieren eines Klebstoffs zwischen die Oberflächen der Substrate **S1** und **S2**;
wobei das zweite Substrat **S2** aus demselben oder einem unterschiedlichen Material wie das Substrat **S1** besteht.

16. Verfahren des Abdichtens oder des Beschichtens eines Substrats **S1** und/oder **S2** umfassend die Schritte
e1) Applizieren einer Haftvermittlerzusammensetzung gemäss einem der Ansprüche 1 bis 12 auf ein Substrat **S1** und/oder **S2**;
e2) Applizieren einer Zusammensetzung zum Abdichten und/oder Beschichten auf die abgelüftete Haftvermittlerzusammensetzung, welche sich auf dem Substrat **S1** und/oder **S2** befindet.
wobei das zweite Substrat **S2** aus demselben oder einem unterschiedlichen Material wie das Substrat **S1** besteht.

17. Verfahren gemäss einem der Ansprüche 15 oder 16, **dadurch gekennzeichnet, dass** sich an den Schritt a3), b3), c4), d2) oder e2) ein Schritt des Aushärtens des Klebstoffs, Dichtstoffs oder der Zusammensetzung zur Herstellung von Beschichtungen anschliesst.

18. Verfahren gemäss einem der Ansprüche 15 bis 17, **dadurch gekennzeichnet, dass** die Substrate **S1** und/oder **S2** mit Silberkeramik beschichtete Substrate sind.

19. Artikel, welcher nach einem Verfahren gemäss einem der Ansprüche 15 bis 18 verklebt, abgedichtet oder beschichtet wurde.

20. Artikel gemäss Anspruch 19, **dadurch gekennzeichnet, dass** der Artikel ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels ist.
